**Europäisches Patentamt**

**European Patent Office**

**Office européen des brevets**

(19)

(11) Publication number: **0 059 758**

**A1**

## (12) EUROPEAN PATENT APPLICATION

published in accordance with Art. 158(3) EPC

(21) Application number: **81902456.3**

(22) Date of filing: **04.09.81**

Data of the international application taken as a basis:

(86) International application number:
**PCT/JP81/00219**

(87) International publication number:
**WO82/00905 (18.03.82 82/08)**

(51) Int. Cl.³: **G 05 B 19/403**

(30) Priority: **10.09.80 JP 125837/80**

(43) Date of publication of application:
**15.09.82 Bulletin 82/37**

(84) Designated Contracting States:
**DE FR GB**

(71) Applicant: **FUJITSU FANUC LIMITED**
**5-1, Asahigaoka, 3-chome**
**Hino-shi, Tokyo 191(JP)**

(72) Inventor: **IMAZEKI, Ryoji**
**987-44 Naganuma-cho Hachioji-shi**
**Tokyo 192(JP)**

(72) Inventor: **KURAKAKE, Mitsuo**
**Room 103, Izumi-Hights 3-10, Tamadaira 3-chome**
**Hino-shi Tokyo 191(JP)**

(74) Representative: **Billington, Lawrence Emlyn et al,**
**Haseltine Lake & Co. 9 Park Square**
**Leeds LS1 2LH(GB)**

(54) **NUMERICAL CONTROL UNIT.**

(57) A numerical control unit which makes it possible to use some special parts instead of a standard operator panel, without any change in the central data processing section or its software. A converter circuit (10) is connected to an operator panel bus (8). The converter circuit (10) changes the signals from a special operator panel (11), a measuring device (12) or the like to be as if they were the signals from a standard operator panel (9), and converts information from a buffer circuit (5) into an acceptable form for the special operator panel, the measuring device or other devices.

FIG. 1

0059758

## S P E C I F I C A T I O N

**TITLE MODIFIED**
**see front page**

### NUMERICAL CONTROLLER

### TECHNICAL FIELD

The present invention relates to a numerical controller which is designed to allow ease in using, in place of an NC operator panel of standard specifications, an operator panel, measuring apparatus and the like of special specifications which differ with users.

### TECHNICAL BACKGROUND

There are some occassions that, according to the kind or use of a numerical controller, it is desirable to employ, instead of an operator panel of standard specifications, an operator panel, measuring apparatus and the like of specifications particulr to each user, such as, for instance, a tool offset measuring apparatus, position offset measuring apparatus, automatic sequence number searcher, automatic work number searcher or the like (hereinafter referred to as special devices). In such a case, it is general practice in the prior art to provide an interface for connection with the special devices separately of an interface having connected thereto the standard operator panel. This conventional method, however, has the defect that the provision of such a separate interface necessitates modifications of software as well as a central data processor of the NC system.

## DISCLOSURE OF THE INVENTION

The present invention is intended for solution of a numerical controller which permits the use of the special devices in place of the standard operator panel without the necessity of modifying the central data processor and software of the numerical controller. In the present invention, a converter circuit for converting information from the special device into information from the standard operator panel is connected to an operator panel bus for connection with the standard operator panel and, even in the case where it is desirable to use a special operator panel instead of the standard one, there is no need of modifying the central data processor and software of the numerical controller.

## BRIEF DESCRIPTION OF THE DRAWINGS

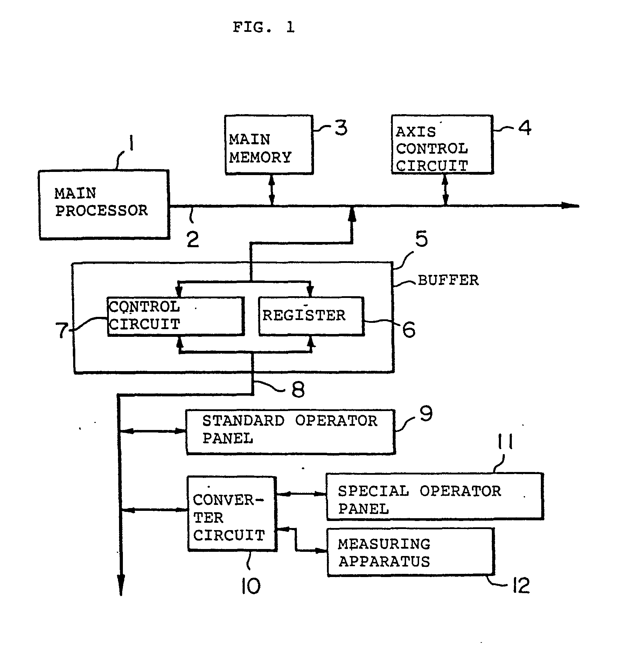

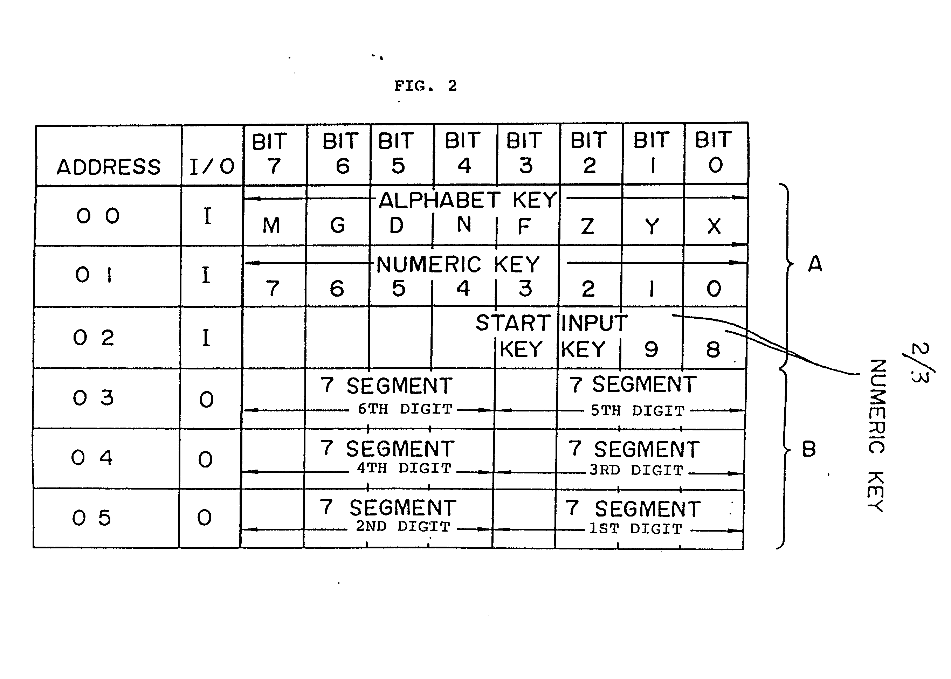

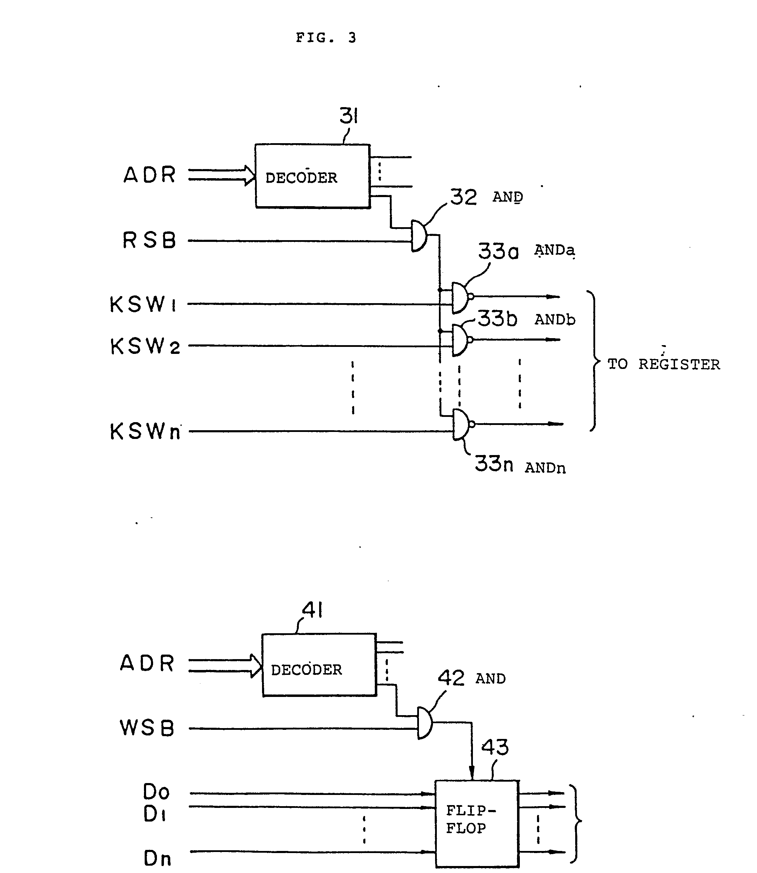

Fig. 1 is a block diagram showing the principal part of an embodiment of the present invention; Fig. 2 is a diagram shwoing a·data layout on a register 6; and Figs. 3 and 4 are circuit diagrams illustrating specific examples of a converter circuit.

## PREFERRED EMBODIMENTS OF THE INVENTION

For a more detailed description of the present invention, its embodiments will hereinafter be described in detail.

Fig. 1 is a block diagram illustrating the principal part of an embodiment of this invention system. Reference numeral 1 indicates a main processor, 2 its main bus, 3 a main memory, 4 an axis control circuit, 5 a buffer circuit, 6 a register, 7 a control circuit, 8 an operator panel bus provided with address, data and strobe buses, 9 a standard operator panel, 10 a converter circuit, 11 a special operator panel, and 12 a measuring apparatus or the like.

The main processor 1 performs data processing for numerical control to execute a predetermined numerical control operation. This operation, as is well-known in the art, is carried out by conducting arithmetic processing of data in the main memory 3 in accordance with an execution program stored in the memory 3 and then providing the processing results to the axis control circuit 4.

The buffer circuit 5 is to transfer data between the main processor 1 and the standard operator panel 9 or the converter circuit 10, and includes the register 6 for storing input/output data and the control circuit 7 for controlling the data transfer between the register 6 and the standard operator panel 9 or the converter circuit 10.

The register 5, for example, as shown in Fig. 2, has an area A for storing input information from the standard operator panel 9, for instance, alphabet key information M, G, D, N, F, Z, Y and X, numeric key information 0 to 9, input key information and start key information, and an area B for storing information for output to the standard operator panel 9, for instance, display information to a six-digit, seven-segment display. The areas A and B are both accessible from the standard operator panel 9 and the main processor 1. Incidentally, let it be assumed that the abovesaid data layout is peculiar to the numerical controller.

The control circuit 7 is to update the contents of the register 6 by sequentially sending out addresses of the areas A and B of the register 6 to the address bus of the operator panel bus 8 with a fixed period to write the input information from the standard operator panel 9 in the area A of the register 6 and send out the contents of its area B to the standard operator panel 9 with the fixed period.

Inputting of key information of the standard operator panel 9 into the main processor 1 is carried out by reading out a corresponding address area in the area A of the register 6 in accordance with a read instruction. The transfer of information to the standard operator panel 9 is carried out by writing the information in a corresponding address area of the area B of the register 6 in accordance with a write instruction.

According to the present invention, the converter circuit 10 is connected to the operator panel bus 8 in such an arrangement as described above. The converter circuit 10 converts a signal from the special operator panel 11, the measuring apparatus or the like 12 into a signal as if it is a signal from the standard operator panel 9 and, further, this circuit converts information from the buffer circuit 5 into a form fit for the special operator panel 11 and so on. For performing such functions, various circuit arrangements are considered, one of which is illustrated in Figs. 3 and 4.

Fig. 3 is a circuit diagram showing the principal part of the section for converting key information of the special operator panel into information equivalent to that of the standard operator panel 9. Reference numeral 31 indicates a decoder. and 32 and 33a to 33n are AND circuits. Address information ADR, which is sequentially provided via the address bus of the operator panel bus 8 from the control circuit 7 with a fixed period, is decoded by the decoder 31 and, by the AND output of the decoded output and a read strobe signal RSB provided via the strobe bus from the control circuit 7, the AND circuits 33a to 33n are opened, permitting key information $KSW_1$ to $KSW_n$ to be written via the data bus of the operator panel bus 8 in that area of the register 6 corresponding to the abovesaid address information via the address bus of the operator panel bus 8 from the control circuit 7 with a fixed period, is decoded by the decoder 41 and, by the AND output of the decoded output and a write strobe signal WSB provided via the strobe bus from the control circuit 7, data $D_0$ to $D_n$ from the buffer circuit 5 are written into the flip-flop 43, from which they are outputted to a display of the special operator panel 11. Also in this case, as is the case with the circuit of Fig. 3, such a circuit connection is made that signals following the data layout of Fig. 2 may be outputted.

Although in the foregoing the memory in the buffer circuit 5 is described to be a register, it may also be replaced with a semiconductor memory or the like, and the data layout in the register may also be other than the aforementioned one.

As has been described in the foreging, according to the present invention, a converter circuit for converting information from special devices into information from a standard operator panel is connected to an operator panel bus for connection with the standard operator panel, and the invention has the advantage that a central data processor and software of the numerical controller need not be modified in the case of employing a special operator panel and the like in place of the standard operator panel. Accordingly, the present invention enables enlargement of the function of the numerical controller ADR. In this case, the signal from the special operator panel can be converted into a signal equivalent to that from the standard operator panel 9 by such a circuit connection that signals following the data layout of Fig. 2 may be inputted. Thus, the special device can be used without modifying the data processor of the numerical controller and its software.

In the case of connecting the measuring apparatus or the like 12, a sequence control circuit is provided in addition to the circuits shown in Fig. 3, by which the measuring apparatus 12 is caused to follow the same sequence as in the case of inputting information by operating the standard operator panel 9. For instance, in the case of increasing or decreasing the diameter of tool as it wears, the standard operator panel is operated in the order a code indicating a tool correction - the number of the tool, for example, D01, - the quantity of correction, for example, a six-digit BCD code - an input key, so that when to connect a tool offset measuring instrument, such an arrangement is made that information may be inputted by the sequence control circuit in the abovesaid sequence.

Fig. 4 is a block diagram showing the principal part of the section for converting information from the buffer circuit 5 into a form fit for the special operator panel 11. Reference numeral 41 indicates a decoder, 42 and AND circuit, and 43 a flip-flop. Address information ADR, which is sequentially provided

- 8 -

while allowing its standardization, and hence is of great

utility.

CLAIM


A numerical controller in which an operator panel bus for connection with a standard operator panel is connected via a buffer circuit to a main bus of a processor for performing data processing for numerical control, characterized in that a converter circuit for converting input/output information of a special device or devices used in place of the standard operator panel into input/output information equivalent to that of the standard operator panel is connected to the operator panel bus.

0059758

FIG. 1

FIG. 2

| ADDRESS | I/O | BIT 7 | BIT 6 | BIT 5 | BIT 4 | BIT 3 | BIT 2 | BIT 1 | BIT 0 |
|---|---|---|---|---|---|---|---|---|---|
| O O | I | ALPHABET KEY | | | | | | | |
| | | M | G | D | N | F | Z | Y | X |
| O I | I | NUMERIC KEY | | | | | | | |
| | | 7 | 6 | 5 | 4 | 3 | 2 | I | 0 |
| O 2 | I | | | | | START KEY | INPUT KEY | 9 | 8 |
| O 3 | O | 7 SEGMENT 6TH DIGIT | | | | 7 SEGMENT 5TH DIGIT | | | |
| O 4 | O | 7 SEGMENT 4TH DIGIT | | | | 7 SEGMENT 3RD DIGIT | | | |
| O 5 | O | 7 SEGMENT 2ND DIGIT | | | | 7 SEGMENT 1ST DIGIT | | | |

A

B

NUMERIC KEY

2/3

0059758

3/3

FIG. 3

TO REGISTER

# INTERNATIONAL SEARCH REPORT

**0059758**

International Application No PCT/JP81/00219

## I. CLASSIFICATION OF SUBJECT MATTER (if several classification symbols apply, indicate all) 3

According to International Patent Classification (IPC) or to both National Classification and IPC

Int. Cl.$^3$ G05B 19/403

## II. FIELDS SEARCHED

| Minimum Documentation Searched 4 | |
|---|---|
| Classification System | Classification Symbols |
| I P C | G05B 15/00, 19/00 |

| Documentation Searched other than Minimum Documentation to the Extent that such Documents are Included in the Fields Searched 5 | |
|---|---|
| Jitsuyo Shinan Koho | 1926 – 1981 |
| Kokai Jitsuyo Shinan Koho | 1971 – 1981 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| Y | JP, A, 53-16176 (TOSHIBA CORPORATION) See 1978-2-14, page 2 (columns 4 to 6) | 1 |
| Y | JP, A, 48-102542 (Eaton Corporation) See 1973-12-22, page 4, 5 and Fig. 2 | 1 |

*"Y"  Document of particular relevancy; the claimed invention can not-be considered to involve an inventive step when the document is combined with one or more other such documents, such combination being obvious to a person skilled in the art.

* Special categories of cited documents: 15

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search : | Date of Mailing of this International Search Report : |
|---|---|
| October 2, 1981 (02.10.81) | October 12, 1981 (12.10.81) |
| International Searching Authority 1 | Signature of Authorized Officer 20 |
| Japanese Patent Office | |

Form PCT/ISA/210 (second sheet) (October 1977)